# EUROPEAN PATENT SPECIFICATION

(11) **EP 4 655 536 B1**
(45) Date of publication and mention of the grant of the patent: **02.12.2026**
(21) Application number: 24707097.2
(22) Date of filing: 24.01.2024
(51) Int. Cl.: F24H 1/12, B60H 1/22, F24H 9/1818, F24H 9/20, F24H 15/128, F24H 15/37, F24H 15/407, H05B 3/06, H05B 3/42, F24H 1/14

(54) **ELECTRIC HEATER FOR VEHICLE**
ELEKTRISCHE HEIZVORRICHTUNG FÜR EIN FAHRZEUG
DISPOSITIF DE CHAUFFAGE ÉLECTRIQUE POUR VÉHICULE

(30) Priority: 24.01.2023 IT 202300000984
(43) Date of publication of application: 03.12.2025
(73) Proprietor: I.R.C.A. S.p.a. Industria Resistenze Corazzate e Affini, 31029 Vittorio Veneto (IT)
(72) Inventor: BENVENUTO, Michele, 31100 Treviso (IT); COLLOT, Roberto, 31015 Conegliano (IT); DEI TOS, Andrea, 31029 Vittorio Veneto (IT); ZOPPAS, Federico, 31100 Treviso (IT)
(74) Representative: Celona, Antonio
(86) International application number: PCT/IB2024/050671
(87) International publication number: WO 2024/157190

(56) References cited:
- EP-A1- 2 797 381
- EP-A2- 3 001 118
- CN-A- 114 368 262
- US-A1- 2005 019 028

## Description

### Field of the invention

The present invention relates to an electric heater for vehicles, preferably but not necessarily electric or hybrid vehicles, in particular to heat a battery cooling liquid, in case of low outdoor temperatures, keeping the ideal operating temperature constant, or to heat a liquid for use in an exchanger for heating the air in the passenger compartment.

### Background art

The battery is essential for the operation of an electric or hybrid vehicle. It must provide the amount of energy necessary to drive the vehicle quickly and reliably. Most batteries are high-voltage hybrid lithium-ion and nickel-metal batteries.

It is essential that the batteries used are operated within a determined temperature range. In fact, the service life starts reducing from an operating temperature of +40°C, while performance and power decrease below -10°C. Further, the temperature difference between the individual battery cells must not exceed a certain value. Exceeding the limit temperatures results in more rapid aging and therefore the corresponding early failure of the battery. Vehicle manufacturers aim for a battery life equal to that of the vehicle. Therefore, the aging process can only be counteracted by optimally managing the temperature.

The battery unit generally includes battery cells, a cooling plate and an auxiliary electric heater. The cooling plate, mounted in the battery cell block, is crossed by the coolant composed, for example, of water and glycol.

To ensure higher performance and maximum service life of the battery, the temperature of the relative coolant must be comprised between approximately 15 and 30 °C. When temperatures are too high, the liquid is cooled, for example, by a low-temperature radiator. If, on the contrary, the temperatures are too low, the coolant is heated by the auxiliary electric heater. The latter thus guarantees sufficient control of the battery temperature at low outdoor temperatures.

To carry out this heating, the battery is integrated into a secondary circuit. This circuit guarantees constant maintenance of the ideal operating temperature, between 15° and 30°C.

Such an electric heater generally comprises at least one electric heating unit for generating heat and for discharging the generated heat to a heat transport medium, represented by the aforementioned liquid, by means of a body made of metal material with which the electric heating unit is in contact.

Such liquid can be, for example, water, glycol, water and glycol, or another suitable heat-transporting liquid.

This liquid flows along a flow path comprising at least one channel arranged on one face of said metal body and closed by a cover fastened onto said metal body. Said at least one channel communicates directly at its ends with the inlet section and the outlet section of the heater.

The electric heater must be compact and is generally shaped as a rectangular parallelepiped. The diameter of the inlet and outlet ports or pipe connections is defined by the section of the hydraulic circuit pipes.

The electric heating unit includes a heating element, for example a tubular resistor immersed in the thickness of the metal body or a film resistance deposited on a surface of said metal body which is not in contact with the liquid.

The electric heating unit is connected to an electronic control unit that allows the thermal power of the heating unit to be controlled.

The electronic control unit can, for example, comprise at least one electronic switch, such as a power transistor or other semiconductor power device, for example for controlling an electric current in the heating unit or for controlling a voltage applied to the heating unit. The power transistor can for example be an insulated gate bipolar transistor (IGBT). The power transistor can be electrically connected in series with the heating element. As a side effect, the electronic control unit typically generates heat that must be dissipated to prevent the control unit from overheating.

Vehicle manufacturers would prefer to use the same electric heater in all vehicle platforms, i.e. a heater with various orientation possibilities within the platform.

Disadvantageously, the known solutions have only one face of the metal body used as a heat exchange surface, and with some mounting orientations of the heater air pockets form in some stagnation areas inside the channel. Therefore, there is a limitation to the possible mounting orientation of the heater. In particular, since the power density on the metal body is very high to reduce its dimensions, layers of air and/or vapor can form at the solid/liquid interface, which prevent heat exchange from the solid to the liquid, to the point of triggering film boiling conditions which could lead to catastrophic melting of the metal body.

The orientation of the heat exchange surface can be favorable or unfavorable with respect to the possibility of removing the air and/or vapor from the exchange surface, therefore respectively unfavorable or favorable for the formation of the boiling film. The gas always tends to rise upwards being less dense than the surrounding liquid, but the orientation of the heat exchange surface, which depends on the positioning of the heater inside a specific vehicle platform, can strongly compromise the removal of the air and/or vapor from the exchange surface.

Vehicle manufacturers would prefer to use the same electric heater in all vehicle platforms while also having the freedom to connect the heater inlet and outlet ports arbitrarily.

Further, reliable operation is required by manufacturers under typical vehicle use conditions, which involve variability in the direction of the gravitational force relative to the heater due to longitudinal and transverse slopes of the road path, as well as inertial forces caused by braking or direction change accelerations. Disadvantageously, in the known solutions, the input port and the outlet port of the heater are predefined since the power transistors are positioned at the inlet section of the heater, which is unheated and arranged upstream of the effective heating area, so as to dissipate the heat generated by the electronic control unit by means of the liquid entering from the inlet port. Therefore, if the manufacturer mounted the heater in such a way as to reverse the direction of the flow of liquid between inlet and outlet, the electronic switches would no longer be adequately cooled because they would be located at the outlet section where the liquid is too hot.

In addition to these drawbacks, other needs of manufacturers are those of:
- reducing pressure losses in the flow of liquid passing through the electric heater, as vehicle centrifugal pumps have low head;
- preventing the formation of recirculation zones in the heating zone of the channel or channels, which would lead to local overheating;
- containing the temperature of the walls of the channel or channels of the metal body to prevent degradation of the cooling liquid;
- reducing the weight and dimensions of the electric heater.

The aforesaid requirements are however conflicting because:
- to reduce pressure losses and recirculation zones, large uniform passage sections are needed, to the detriment of dimensions, and without discontinuities;
- to reduce the temperature of the walls of the channel or channels it is necessary to increase the heat exchange surface, to the detriment of the dimensions, or to introduce discontinuities in the flow, for example variations in section, turbulators, sharp curves, to the detriment of the pressure losses.

There are, for example, some solutions in which the inlet and outlet sections of the heater are voluminous collectors thermally isolated from the effective heating area, resulting in a considerable size and not contributing to the heating of the liquid and, thus, reducing the heat exchange surface.

Furthermore, these inlet and outlet sections have a much larger cross-section than the inlet/outlet ports, causing strong liquid speed variations which increase pressure losses and involve a risk of overheating in recirculation zones.

Document CN114368262A discloses a conventional electric heater for a vehicle.

Thus, there is a need to provide an innovative electric heater to solve the aforementioned drawbacks.

### Summary of the invention

An object of the present invention is to provide an electric heater for vehicles that allows any mounting orientation, preventing the formation of stagnant air pockets within the flow path, therefore not triggering film boiling conditions that could lead to a catastrophic melting of the metal body.

Another object of the present invention is to provide an electric heater that also allows the inlet and outlet ports of the heater to be arbitrarily connected to the corresponding hydraulic circuit without any contraindications.

A further object of the present invention is to provide an electric heater that allows better performance, simultaneously guaranteeing good cooling of the electronic control unit, a greater heat exchange surface, low pressure losses, high thermal power and reduced dimensions.

The present invention achieves at least one of these objects, and other objects which will be evident in light of the present description, by means of an electric heater for a vehicle, adapted to heat a liquid passing through said heater, comprising
- a body made of die-cast metal material;
- at least one electrical resistor at least partially incorporated along a first median plane X of said body;
- an inlet section and an outlet section for the liquid, both arranged on a same side of the heater;
- a first flow path for the liquid, from the inlet section to the outlet section, made on a first face of said body arranged at a first side of said first median plane X;
- a second flow path for the liquid, from said inlet section to said outlet section, made on a second face of said body arranged at a second side of said first median plane X opposite the first side;
wherein the first flow path and the second flow path, which include said inlet section and said outlet section, are arranged symmetrically both with respect to said first median plane X and with respect to a second median plane Y of the body perpendicular to said first median plane X.

Advantageously, the heater of the invention in any mounting position always has at least one face of the metal exchanger body which presents an orientation of the exchange surface favorable to the possibility of removing the air and/or vapor, even in conditions of road slope and in the presence of lateral accelerations, and which can therefore release heat and prevent catastrophic melting of the exchanger body, should the other surface experience film boiling conditions.

A further advantage of the invention is represented by the fact that the liquid circuit inside the heater is symmetrical and the flow direction can be freely reversed, allowing vehicle manufacturers to use the heater of the invention in all vehicle platforms with the freedom to connect the inlet and outlet ports of the heater arbitrarily.

In a preferred embodiment, another advantage of the invention is represented by the fact that the flow direction can be reversed inside the heater without jeopardizing the dispersion of heat of the electronic control unit, which is cooled by a liquid at an intermediate compromise temperature between inlet and outlet.

Further features and advantages of the invention will become more apparent in the light of the detailed description of exemplary but not exclusive embodiments.

The dependent claims describe particular embodiments of the invention.

### Brief description of the figures

The description of the invention refers to the accompanying drawings, which are provided by way of non-limiting example, in which:
Fig. 1 shows a perspective view of an electric heater according to the invention;
Fig. 2 shows a cross-section of the electric heater in Fig. 1;
Fig. 3 shows a view of a face of the heat exchanger body made of die-cast metal material in a first embodiment of the invention;
Fig. 4 shows a view of a face of the heat exchanger body made of die-cast metal material in a second embodiment of the invention;
Fig. 5 shows a view of a face of the heat exchanger body made of die-cast metal material in a third embodiment of the invention;
Fig. 6 shows a view of the face of the heat exchanger body made of die-cast metal material in a fourth embodiment of the invention;
Fig. 7 shows a sectional view, along a first median plane, of the heater of the invention with a first electrical resistor variant;
Fig. 8 shows a sectional view, along a first median plane, of the heater of the invention with a second electrical resistor variant;
Fig. 9 shows an enlargement of a sectional view of part of a flow path of the heater of the invention;
Fig. 10 shows an enlargement of a further sectional view of the two flow paths of a heater of the invention, such as those illustrated in Figures 3-6;
Fig. 11 shows a perspective view of a component of the heater of the invention;
Fig. 12 shows a sectional view of some components of the heater of the invention;
Fig. 13 shows an exemplary view of the position of some components of the heater of the invention;
Fig. 14 shows a first sectional view of some details of the heater of the invention;
Fig. 15 shows a second sectional view of said details of the heater of the invention;
Fig. 16 shows a first variant of a component of the heater;
Fig. 17 shows a second variant of the component in Fig. 16;
Fig. 18 shows a third variant of the component in Fig. 16;
Fig. 19 shows a fourth variant of the component in Fig. 16.

The same reference numerals and letters in the drawings identify the same elements or components.

### Description of example embodiments of the invention

With reference to the Figures, some examples of an electric heater for vehicles, in particular electric or hybrid vehicles, are illustrated.

This electric heater can be used, in particular, to heat a battery cooling liquid of an electric or hybrid vehicle, in case of low outdoor temperatures, keeping the ideal operating temperature constant, or to heat a liquid for use in an exchanger for heating the air in the passenger compartment.

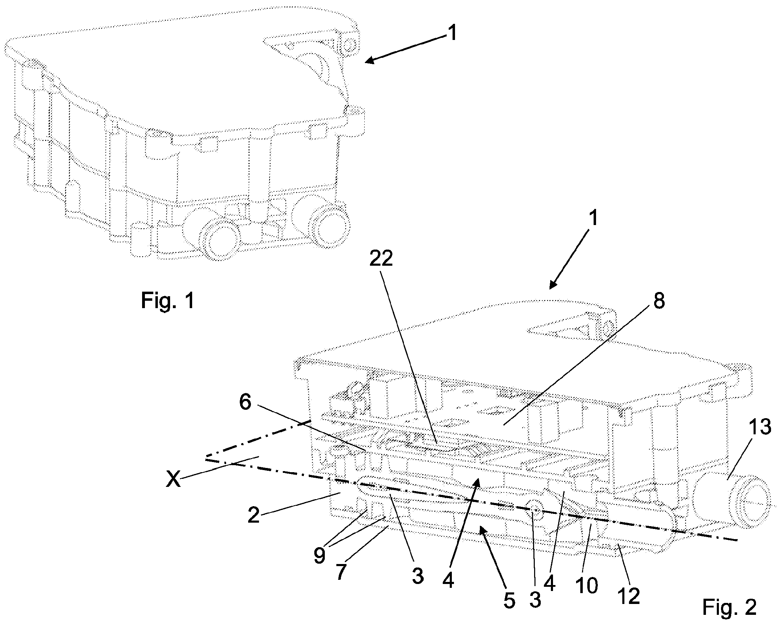

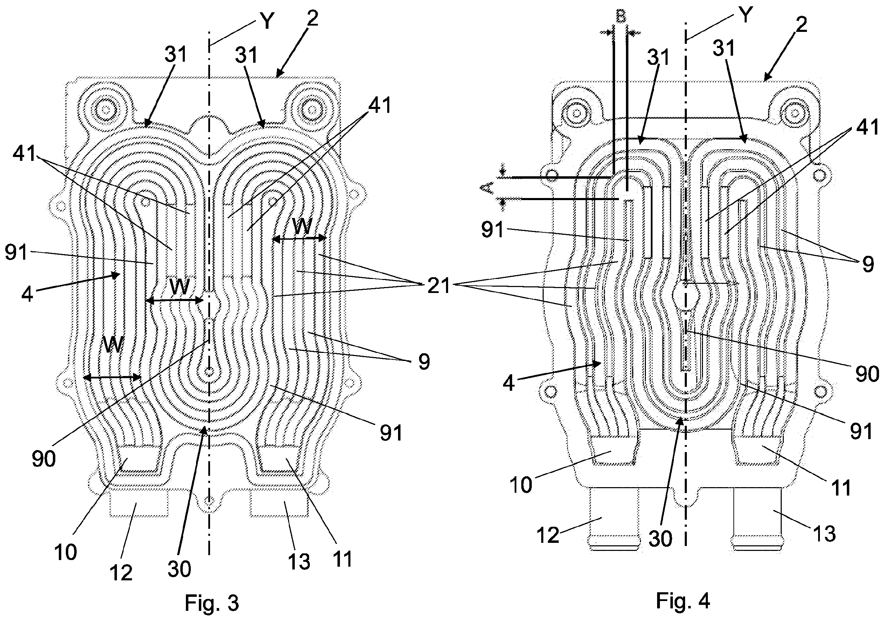

In all the embodiments of the invention, the electric heater comprises
- a body 2 made of die-cast metal material, preferably a single body as shown for example in Figures 2-10;
- at least one electrical resistor 3, 32, 33 at least partially incorporated along a first median plane X of the body 2 (Figures 2, 7-8);
- an inlet section 10 and an outlet section 11 for the liquid, both arranged on a same side of the heater (Figures 3-6).

Preferably, the body 2 is a block of die-cast metal material, e.g. aluminum or another suitable material, having a substantially flat shape with two major dimensions (length and width), preferably at least double the third dimension (thickness).

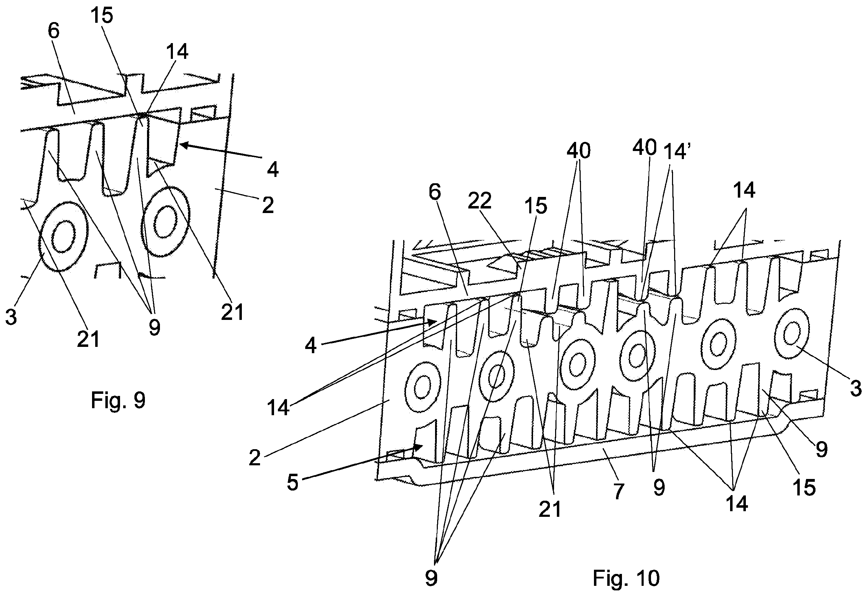

Advantageously there are provided (Figures 2-6 and 10) a first flow path 4 for the liquid, from the inlet section 10 to the outlet section 11, made on a first face of the body 2 arranged at a first side of said first median plane X; and a second flow path 5 for the liquid, from said inlet section 10 to said outlet section 11, made on a second face of the body 2 arranged at a second side of said first median plane X opposite the first side. In other words, as can be seen in Figures 2 and 10, the first face of the body 2 is arranged on a first side of said first median plane X whereas the second face of said body 2 is arranged on a second side of said first median plane X opposite the first side. This way, vehicle manufacturers can use the heater of the invention with any orientation within vehicle platforms, as the heater will always have at least one face of the exchanger body that has a heat exchange surface favorable to the possibility of removing the air and/or vapor that can form at the solid/liquid interface. Further, this allows for more reliable operation under typical vehicle use conditions, which involve variability in the direction of the gravitational force relative to the heater due to longitudinal and transverse slopes of the road path, as well as inertial forces caused by braking or direction change accelerations.

Advantageously, the first flow path 4 and the second flow path 5, which include in common both the inlet section 10 and the outlet section 11, are symmetrically arranged both with respect to the first median plane X and with respect to a second median plane Y of the body 2 perpendicular to said first median plane X. In particular, the first flow path 4 and the second flow path 5 are arranged symmetrically to each other with respect to the first median plane X; and each flow path 4, 5 is also symmetrical with respect to the second median plane Y. Therefore, the first median plane X of the body 2 is a plane of symmetry of at least one portion of the body 2 which comprises the first flow path 4 and the second flow path 5. In fact, the median plane X divides said at least one portion of the body 2 into two parts which correspond in a planar symmetry of plane X. This configuration of the liquid circuit inside the heater of the invention allows vehicle manufacturers to use the heater of the invention in all vehicle platforms with the freedom to connect the inlet and outlet ports of the heater arbitrarily, freely reversing the flow direction.

The heater of the invention further comprises (Figure 2):
- a first cover 6 that closes with a first side thereof the first flow path 4;
- a second cover 7 which closes with a first side thereof the second flow path 5;
- an electronic control unit 8 arranged on a second side of said first cover 6 or second cover 7, opposite the first side, and comprising at least one electronic switch 22.

Preferably, the covers 6, 7 are arranged parallel to each other and to the median plane X.

The covers 6, 7 preferably rest in the compression area of a respective sealing gasket on the outer perimeter, respectively, of the first face and of the second face of the body 2. The covers 6, 7 are thus components separated from the heating body 2, being connected to the latter, for example, with screws and gaskets.

Preferably, to improve the compactness of the solution of the invention and simultaneously increase the heat exchange between body 2 and liquid, both the first flow path 4 and the second flow path 5 are provided with an odd number of hairpin bends, preferably but not necessarily only three hairpin bends 30, 31 (Figures 3-6), and comprise a plurality of channels 21, substantially parallel to one another, which branch off from the inlet section 10 and flow into the outlet section 11, both of said sections arranged on a same side of the heater.

Advantageously, the channels 21 of the first flow path 4 and the second flow path 5 are delimited by bulkheads 9 projecting respectively from the first face and second face of the body 2. Such bulkheads 9, and thus the channels 21, can be made by mechanically processing the first face and the second face of the body 2 or be directly made by die-casting, producing a hollow area on both faces from which the bulkheads project.

The presence of the bulkheads 9 on both faces of the body 2 improves the removal of heat by increasing the effective heat exchange surface, at the same time reducing the wall temperature of the channels without the need to increase the overall dimensions and without the need for discontinuities in the flow and, therefore, higher pressure losses..

Preferably, each channel 21 has a width of about 3-6 mm and a height of about 7-12 mm. Therefore, the small height of the bulkhead 9 increases the heat exchange efficiency thereof.

By way of non-limiting example, as shown in Figures 3-6, each flow path 4, 5, comprises three channels 21 and two intermediate bulkheads 9. Figures 3-6 illustrate only the first flow path 4 provided on the first face of the body 2. On the opposite and underlying side, i.e. on the second face of the body 2, the second flow path 5 is provided.

In a preferred configuration, both for the first flow path 4 and for the second flow path 5, the intermediate hairpin bend 30 of said three hairpin bends is arranged at the second median plane Y and proximal to the side of the heater where the inlet section 10 and the outlet section 11 are arranged; while two side hairpin bends 31 of said three hairpin bends are arranged symmetrically with respect to said second median plane Y and distal from said side of the heater where the inlet section 10 and the outlet section 11 are arranged. Therefore, the first flow path 4 and the second flow path 5, and thus the respective channels 21, have a substantially capital M shape, with the side legs of the M shape at the inlet section 10 and outlet section 11, respectively.

This M shape of each flow path 4, 5 is defined by further bulkheads 90, 91 formed on the two opposite faces of the body 2. In particular, two side bulkheads 91 are arranged symmetrically with respect to the second median plane Y and branch off from the side of the body 2 where the inlet section 10 and outlet section 11 are arranged; whereas a central bulkhead 90 is arranged along said second plane Y and branches off from the side of the body 2 opposite the one where the inlet section 10 and the outlet section 11 are arranged.

Optionally, in the stretches that connect the inlet section 10 to the proximal side hairpin bend 31, the outlet section 11 to the proximal side hairpin bend 31, and the side hairpin bends 31 to the intermediate hairpin bend 30, respectively, the bulkheads 9, 90, 91, and therefore the respective channels 21, have at least one undulated portion for producing minimal turbulence in the liquid.

Preferably, in the heater of the invention, there are provided:
- a first port or pipe connection 12, projecting from the body 2 and communicating with the inlet section 10;
- and a second port or pipe connection 13, projecting from the body 2 and communicating with the outlet section 11.

The first port 12 and second port 13 can be arranged symmetrically with respect to the second median plane Y.

Advantageously, the ratio between the width W of the first flow path 4 and of the second flow path 5, and the inner diameter of the first port 12 and of the second port 13 is in a range from 1 to 2, preferably from 1.2 to 1.6. This ratio allows the liquid not to undergo strong speed variations at the inlet and outlet of the heater, which would increase pressure losses and imply the risk of overheating in possible recirculation zones.

The width W, indicated for example in Figure 3, is the width of the flow path which includes the width of the channels 21 of said path and the thickness of the intermediate bulkheads 9 between said channels 21. In the example of the Figures, the width of the flow path consists of the width of the three channels 21 and the thickness of the two intermediate bullheads 9.

A preferred variant of the heater of the invention provides that the at least one electronic switch 22 is arranged in proximity to the second median plane Y, in a distal position both from the inlet section 10 and from the outlet section 11. Even more preferably, this position is a distal and median position, i.e. equally distal, between the inlet section 10 and the outlet section 11. This configuration allows the flow direction of liquid inside the heater to be reversed without jeopardizing the heat dispersion of the electronic control unit 8, which is, in fact, cooled by a liquid at an intermediate compromise temperature between inlet and outlet.

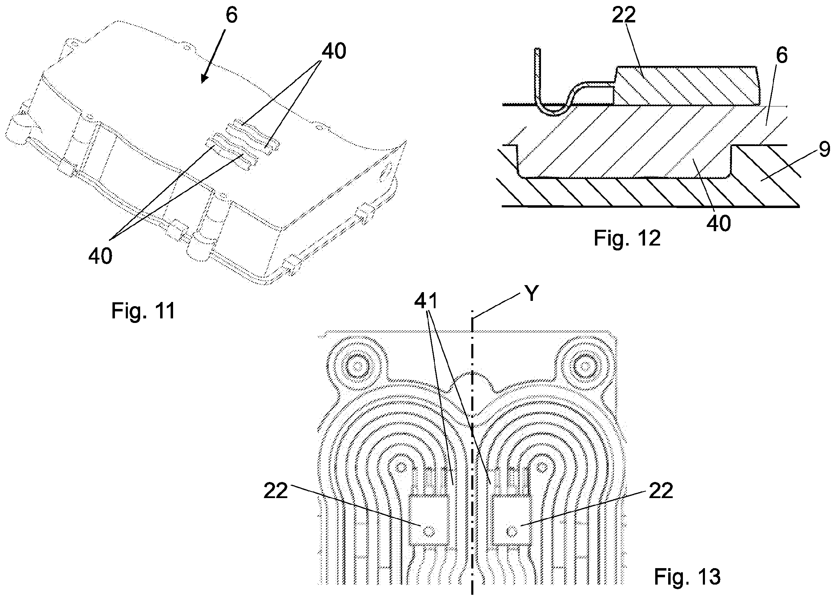

Preferably, in order to dissipate the heat generated by the electronic control unit, preventing the overheating thereof, efficiently and limiting the pressure losses as much as possible, at least one longitudinal fin 40 can be provided (Figures 10-12), projecting from the first side of the first cover 6 at said at least one electronic switch 22 and inserted into a corresponding longitudinal recess 41 (Figures 3-6), or longitudinal interruption, of at least one bulkhead 9 so that the longitudinal flanks of said at least one longitudinal fin 40 define part of a side wall of two adjacent channels 21 (Figure 10).

In other words, the longitudinal fin 40 of the cover 6, arranged at an electronic switch 22, is configured to locally replace a portion of bulkhead 9 delimiting two adjacent channels 21 of the flow path 4 of the liquid, said portion of bulkhead 9 corresponding to the space where the longitudinal recess 41, or longitudinal interruption, is provided.

In more detail, as illustrated for example in Figures 3-6 and 10-12, each longitudinal fin 40 has a shape substantially complementary to the shape of the corresponding longitudinal recess 41, or longitudinal interruption, of the respective bulkhead 9 such as to keep the side wall of the two adjacent channels 21 substantially unaltered. This means that the longitudinal fin 40 occupies all of the free space of the longitudinal recess 41, or longitudinal interruption, of a corresponding bulkhead 9. In particular, the longitudinal extension of each longitudinal fin 40 is substantially equal to the longitudinal extension of a respective recess or longitudinal interruption 41 provided in a corresponding bulkhead 9.

Therefore, the electronic switch 22 is adequately cooled as the heat exchange surface below said switch increases, but the pressure losses do not increase because the flow of liquid is substantially unaltered, in particular with respect to the flow of the liquid flowing in the channels where no longitudinal recess or longitudinal interruption in the bulkheads is provided. In other words, the insertion of each longitudinal fin 40 in the respective longitudinal recess 41 of the corresponding bulkhead 9 allows the side wall of two adjacent channels 21 to be entirely reconstructed.

In one variant, at least two electronic switches 22 are provided, preferably only two electronic switches, and at least one longitudinal fin 40 is provided at each electronic switch 22 and inserted into a respective longitudinal recess 41, or longitudinal interruption, of a corresponding bulkhead 9.

In a further variant, at least two longitudinal fins 40, preferably only two longitudinal fins, are provided at each electronic switch 22 and inserted into a respective longitudinal recess 41, or longitudinal interruption, of at least one corresponding bulkhead 9, for example of a single bulkhead 9, or of at least two corresponding bulkheads 9, for example of two corresponding bulkheads 9 (Figures 10, 11, 13).

In other variants, the following can be provided:
- an even number of electronic switches 22 arranged symmetrically with respect to the second median plane Y,
- or an odd number of electronic switches, arranged symmetrically with respect to the second median plane Y, also possibly only one electronic switch.

In the example of Figures 3-6 and 13, two electronic switches 22 are provided arranged symmetrically with respect to the second plane Y, and the distance between one switch and the inlet section 10 is equal to the distance between the other switch and the outlet section 11.

In all these variants, the longitudinal fin or the longitudinal fins 40 can be smooth along the longitudinal flanks, or corrugated along said longitudinal flanks, for locally inducing a light turbulence and for increasing the heat exchange between electronic switches 22 and liquid.

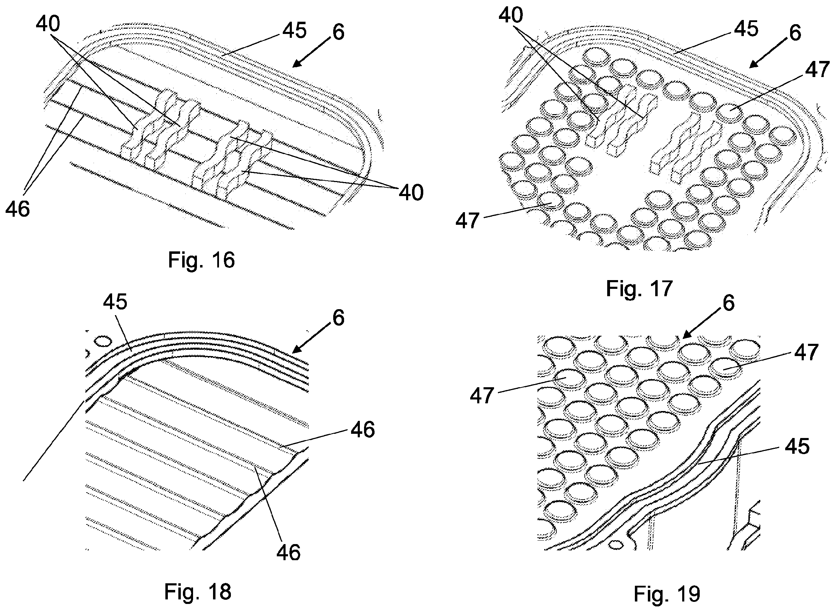

To further increase the dissipation of the heat generated by the electronic control unit it is possible to provide, in addition to the longitudinal fins 40, linear projections 46, preferably but not necessarily parallel to each other, spaced apart by dips (Figure 16), or projecting pins 47 (Figure 17) on all or part of the inner surface of the cover 6, i.e. of the aforesaid first side of the cover 6, in contact with the liquid. An alternative variant does not provide the longitudinal fins 40 but only the linear projections 46 (Figure 18), preferably but not necessarily parallel to one another, spaced apart by dips, or the projecting pins 47 (Figure 19) on all or part of the inner surface of the cover 6.

In a further preferred variant of the heater of the invention, illustrated in Figures 9 and 10, a gap 14 is provided between the end edge 15 of the bulkheads 9, intermediate to the channels 21, and the first cover 6 and the second cover 7, respectively, whereby the channels 21 of each flow path 4, 5 communicate transversely with each other at this gap.

A gap can also be provided between the end edge of the further bulkheads 90, 91 and the respective covers 6, 7.

Preferably, the gap 14 is comprised in a range from 0.01 to 0.4 mm.

Optionally, the end edge 15 of the bulkheads 9, 90, 91 is a rounded edge.

The flow of liquid entering into the heater is diverted into the inlet section 10 in the two flow paths 4, 5 and mainly proceeds into the channels 21, following the shape of the bulkheads. However, because of this gap between the vertices of the bulkheads and the corresponding cover 6, 7, the channels 21 are not hermetically separated and a secondary flow is created transverse to the channels 21, i.e. a secondary bypass flow between the inlet section and the outlet section. Therefore, the channels 21 substantially parallel to one another are not connected in parallel between the inlet section and the outlet section as there is always a transverse flow from one channel to the other.

The advantages of providing this gap are multiple:
- avoiding a hyperstatic resting of the covers 6, 7 on the respective faces of the body 2, and thus avoiding tension in assembly between the parts, considering that the parts have planarity errors;
- avoiding an extended thermal contact between body 2 and cover onto which the electronic control unit 8 is fastened, so as to reduce to a maximum any transfer of heat from the bulkheads to the electronic control unit; for this purpose, the end edge or tip of the bulkheads can also be rounded to minimize the transfer of heat in any accidental contact points;
- promoting the upwards movement of the bubbles due to the effect of the force of relative gravity, preventing any air bubbles in the liquid from stagnating inside the channels, in particular if the flow is slow with the M-shaped flow path.

If one or more longitudinal fins 40 are provided on the first side of the first cover 6 at one or more electronic switches 22, in addition to the gap 14 between the end edge 15 of the bulkheads 9 and the first cover 6 and the second cover 7, respectively, also a second gap 14' can be provided (Figure 10) between the longitudinal fins 40 and the corresponding longitudinal recess 41, or longitudinal interruption, of the respective bulkhead 9 of the flow path 4 only. Therefore, the mutually adjacent channels 21 in the flow path 4 are also communicating at the gaps 14'.

The second gap 14' is also preferably comprised in a range from 0.01 to 0.4 mm. In a variant, the end edge of the bulkheads 9,90, 91 and/or of the longitudinal fins 40 and/or of the longitudinal recesses 41 is a rounded edge.

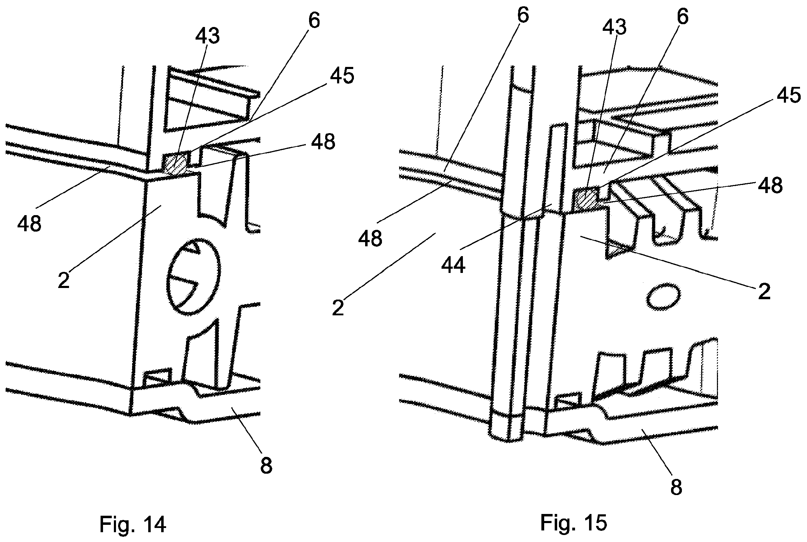

In a further variant illustrated in Figure 14-15, to further reduce the transfer of heat from the heating body 2 to the cover 6 which also accommodates the electronic control unit, a further gap 48 between body 2 and cover 6 is conveniently provided also in the perimeter area in proximity to the sealing gasket 43, arranged in said perimeter area to prevent the leakage of liquid from the respective flow path towards the outside of the heater.

The sealing gasket 43 is arranged in a perimeter housing 45 made on the respective cover and/or on the respective face of the body 2.

The further gap 48 is provided on both the inner and outer sides of said perimeter housing 45 (Figure 14), except preferably on the outer side at the outer housings 44 of fastening screws (Figure 15), which fasten both covers 6, 7, and the body 2 arranged between them, to one another.

In all variants of the heater of the invention, each flow path 4, 5 can be produced according to different embodiments.

A first embodiment of the flow path, illustrated in Figure 3, provides that the three hairpin bends 30, 31 are bends with an angle at the center greater than 180°, preferably greater than 180° and less than 220°.

In the non-limiting example of Figure 3, the intermediate hairpin bend 30 has an angle at the center of about 190-200°; whereas the two side hairpin bends 31 have an angle at the center of about 200-220°.

In this embodiment, the channels 21 have the most uniform section as possible and the three hairpin bends 30, 31 are rounded to further reduce the pressure losses. Heat exchange is promoted by the heat exchange surface increase obtained through the bulkheads and not by the shape of the bends 30, 31.

A second embodiment of the flow path, illustrated in Figure 4, provides that the three hairpin bends 30, 31 are bends with an angle at the center of about 180°; and in which at least one channel 21, preferably the most internal channel, has, at the two side hairpin bends 31, a width A, measured parallel to the second median plane Y, which is greater than the width B of the channel itself, measured perpendicularly to said second median plane Y.

This second embodiment allows the weight and producibility of the body 2 to be optimized. Compared to the first embodiment, the hairpin bends are less rounded; however, to reduce turbulence and pressure losses the width of at least one channel 21 at the side hairpin bends 31 is increased (A>B), so that the fluid slows at the bend and generates less turbulence.

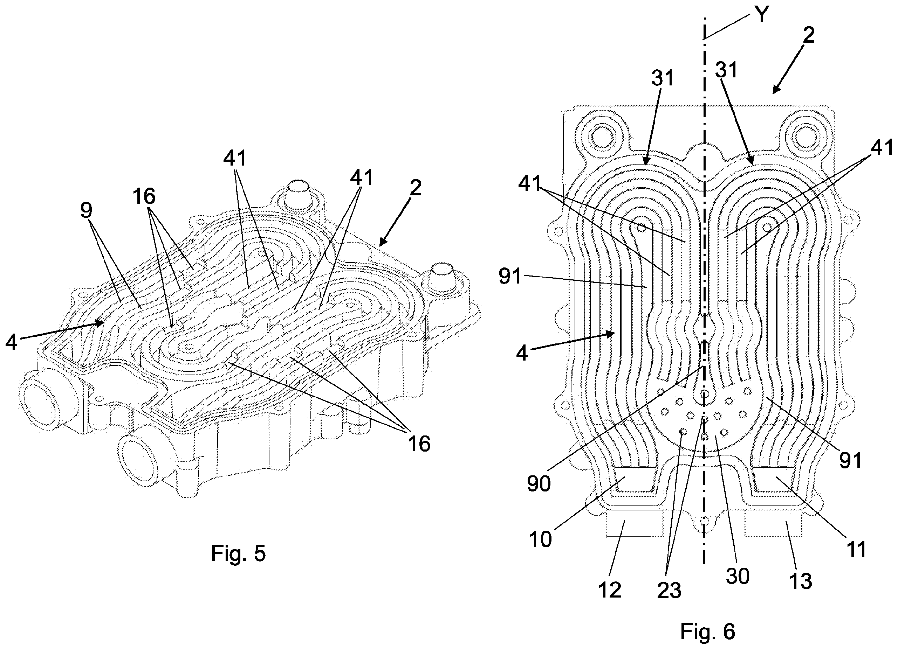

A third embodiment of the flow path, illustrated in Figure 5, provides that the bulkheads 9, in particular the intermediate bulkheads between one channel 21 and the adjacent one, are provided with at least one respective recess 16 at the end edge 15. Preferably, but not necessarily, the recesses 16 are arranged symmetrically with respect to the median plane Y. In Figure 5 the number of recesses 16 is equal to six, but their number can be greater or less than 6.

The depth of said recesses 16 is preferably comprised between 0.2 and 3 mm, preferably between 1 and 3 mm.

These recesses 16 further promote the aforesaid transverse flow between the channels 21. By varying their number and position, a predetermined design value of flow transversal to the channels can be defined.

A fourth embodiment of the flow path, illustrated in Figure 6, provides that at least some bulkheads 9, in particular the intermediate bulkheads between one channel 21 and the adjacent one, are completely interrupted at the intermediate or central hairpin bend 30, and a plurality of protrusions 23 are provided in said intermediate hairpin bend 30.

The protrusions 23 can be in the form of pegs of various possible shapes (circular, oval, rectangular section, etc.), adapted to increase the heat exchange surface locally. In fact, it is possible that at least one electrical resistor 3 has at the central hairpin bends 30 a greater concentration of power. The local increase in heat exchange is obtained by replacing the flow path with substantially M-shaped channels with a flow path with two U-shaped channel stretches, also defined by the bulkheads 91 and connected in sequence from an intermediate curved area from which the pegs 23 project and in which the flow of the channels joins completely.

Figures 5 and 6 illustrate the features described for the third and fourth embodiments in combination with the features described above of the first embodiment. Alternatively, it is possible to combine the features described for the third and fourth embodiment with the features described above for the second embodiment.

In all embodiments of the heater of the invention, preferably the at least one electrical resistor 3 is a tubular resistor partially incorporated along the first median plane X of the body 2.

In particular, the heating part of said at least one electrical resistor 3 is completely incorporated into the body 2 along said first median plane X.

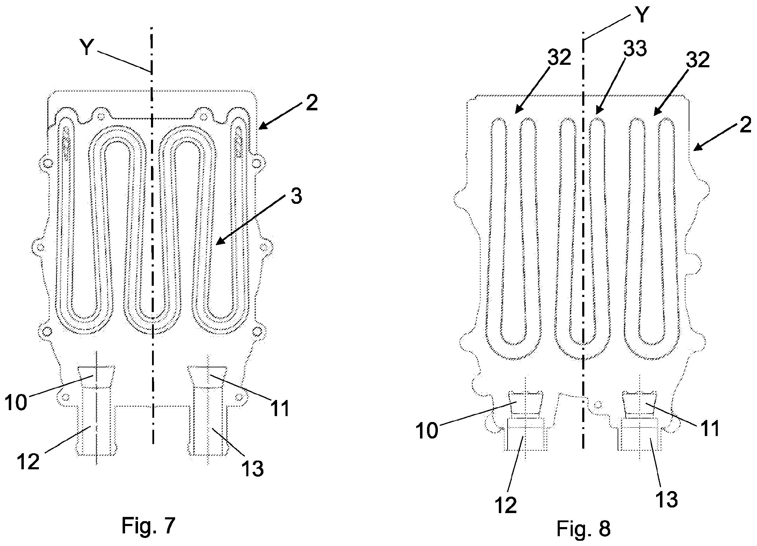

Figure 7 illustrates a first variant wherein only one tubular serpentine resistor 3 is provided, preferably arranged symmetrically with respect to the second median plane Y.

Figure 8 illustrates a second variant wherein at least three tubular resistors 33, 32 are provided, which can be electrically connected in series or in parallel; preferably wherein the assembly of said at least three tubular resistors is symmetrically arranged with respect to the second median plane Y.

In all the variants the single resistor 3 or all the resistors 33, 32 are arranged exclusively along the first median plane X, partially incorporated into a single body 2.

## Claims

1. An electric heater (1) for a vehicle, adapted to heat a liquid crossing said heater, comprising
- a body (2) made of die-cast metal material;
- at least one electrical resistor (3) at least partially incorporated into the body (2) along a first median plane (X) of said body (2);
- an inlet section (10) and an outlet section (11) for the liquid, both arranged on a same side of the heater;
- a first flow path (4) for the liquid, from the inlet section (10) to the outlet section (11), made on a first face of said body (2) arranged at a first side of said first median plane (X);
- a second flow path (5) for the liquid, from said inlet section (10) to said outlet section (11), made on a second face of said body (2) arranged at a second side of said first median plane (X) opposite the first side;
wherein the first flow path (4) and the second flow path (5), which include said inlet section (10) and said outlet section (11), are arranged symmetrically both with respect to said first median plane (X) and with respect to a second median plane (Y) of the body (2) perpendicular to said first median plane (X).

2. A heater according to claim 1, wherein there are provided
- a first cover (6) which closes with a first side thereof the first flow path (4);
- a second cover (7) which closes with a first side thereof the second flow path (5);
- an electronic control unit (8) arranged on a second side of said first cover (6) or second cover (7), opposite the first side;
wherein said electronic control unit (8) comprises at least one electronic switch (22) arranged in proximity to said second median plane (Y), in a distal position both from said inlet section (10) and from said outlet section (11).

3. A heater according to claim 1 or 2, wherein both the first flow path (4) and the second flow path (5) are provided with an odd number of hairpin bends, and comprise a plurality of channels (21) which branch off from the inlet section (10) and flow into the outlet section (11); preferably wherein the channels (21) of the first flow path (4) and of the second flow path (5) are delimited by bulkheads (9) projecting respectively from the first face and from the second face of the body (2).

4. A heater according to claim 3, wherein three hairpin bends are provided and, both for the first flow path (4) and for the second flow path (5), the intermediate hairpin bend (30) of said three hairpin bends is arranged at the second median plane (Y) and proximal to the side of the heater where the inlet section (10) and the outlet section (11) are arranged; while the two side hairpin bends (31) of said three hairpin bends are arranged symmetrically with respect to said second median plane (Y) and distal from said side of the heater.

5. A heater according to any one of the preceding claims, wherein there are provided
- a first pipe connection (12), projecting from the body (2), communicating with said inlet section (10);
- and a second pipe connection (13), projecting from the body (2), communicating with said outlet section (11);
preferably wherein said first pipe connection (12) and said second pipe connection (13) are arranged symmetrically with respect to said second median plane (Y).

6. A heater according to claim 5, wherein the ratio between the width (W) both of the first flow path (4) and of the second flow path (5) and the inner diameter of the first pipe connection (12) and of the second pipe connection (13) is in a range from 1 to 2, preferably from 1,2 to 1,6.

7. A heater according to any one of claims 3 to 6, wherein a gap (14) is provided between the end edge (15) of the bulkheads (9) and, respectively, a first cover (6), which closes with a first side thereof the first flow path (4), and a second cover (7) which closes with a first side thereof the second flow path (5), whereby the channels (21) communicate transversely with each other at said gap (14); preferably wherein the end edge (15) of the bulkheads (9) is a rounded edge.

8. A heater according to claim 7, wherein the bulkheads (9) are provided with at least one respective recess (16) at the end edge (15).

9. A heater according to any one of claims 5 to 8, wherein at least some bulkheads (9) are interrupted at an intermediate hairpin bend (30) of the first flow path (4) and of the second flow path (5), said intermediate hairpin bend being arranged at the second median plane (Y) and proximal to the side of the heater where the inlet section (10) and the outlet section (11) are arranged; and a plurality of projections (23) are provided into said intermediate hairpin bend (30).

10. A heater according to any one of claims 4 to 9, wherein the hairpin bends (30, 31) are bends with an angle at the center greater than 180°, preferably greater than 180° and less than 220°.

11. A heater according to any one of claims 4 to 9, wherein the three hairpin bends (30, 31) are bends with an angle at the center of about 180°; and wherein at least one channel has, at the two side hairpin bends (31), a width A, measured parallel to the second median plane, which is greater than the width B of the channel itself, measured perpendicularly to said second median plane.

12. A heater according to any one of the preceding claims, wherein said at least one electrical resistor (3) is at least a tubular resistor.

13. A heater according to any one of claims 2 to 12, wherein a sealing gasket (43) is provided, arranged in a perimeter housing (45) made on the respective cover (6, 7) and/or on the respective face of the body (2), and wherein a gap (48) is provided at said perimeter housing (45) between the body (2) and the cover (6, 7), on whose second side the electronic control unit (8) is arranged.

14. A heater according to any one of claims 3 to 13, wherein at least one longitudinal fin (40) is provided, projecting from the first side of said first cover (6) or second cover (7) at said at least one electronic switch (22) and inserted into a corresponding longitudinal recess (41) or longitudinal interruption of at least one bulkhead (9) so that the longitudinal flanks of said at least one longitudinal fin (40) define part of a side wall of two adjacent channels (21).

15. A heater according to claim 2 or 14, wherein there are further provided, on all or part of the first side of the first cover (6) or second cover (7), linear projections (46), preferably parallel to each other, spaced apart by dips, or projecting pins (47).

## Patentansprüche

1. Elektrische Heizvorrichtung (1) für ein Fahrzeug, die dazu ausgelegt ist, eine die Heizvorrichtung durchquerende Flüssigkeit zu erwärmen, umfassend
- einen Körper (2), der aus Metalldruckgussmaterial hergestellt ist;
- mindestens einen elektrischen Widerstand (3), der zumindest teilweise in den Körper (2) entlang einer ersten Mittenebene (X) des Körpers (2) eingebettet ist;
- einen Einlassabschnitt (10) und einen Auslassabschnitt (11) für die Flüssigkeit, die beide auf einer selben Seite der Heizvorrichtung angeordnet sind;
- einen ersten Strömungspfad (4) für die Flüssigkeit von dem Einlassabschnitt (10) zu dem Auslassabschnitt (11), der auf einer ersten Fläche des Körpers (2) ausgebildet ist, die an einer ersten Seite der ersten Mittenebene (X) angeordnet ist;
- einen zweiten Strömungspfad (5) für die Flüssigkeit von dem Einlassabschnitt (10) zu dem Auslassabschnitt (11), der auf einer zweiten Fläche des Körpers (2) ausgebildet ist, die an einer der ersten Seite gegenüberliegenden zweiten Seite der ersten Mittenebene (X) angeordnet ist;
wobei der erste Strömungspfad (4) und der zweite Strömungspfad (5), die den Einlassabschnitt (10) und den Auslassabschnitt (11) einschließen, sowohl in Bezug auf die erste Mittenebene (X) als auch in Bezug auf eine zweite Mittenebene (Y) des Körpers (2), die senkrecht zur ersten Mittenebene (X) steht, symmetrisch angeordnet sind.

2. Heizvorrichtung nach Anspruch 1, wobei Folgendes vorgesehen ist
- eine erste Abdeckung (6), die mit einer ersten Seite davon den ersten Strömungspfad (4) verschließt;
- eine zweite Abdeckung (7), die mit einer ersten Seite davon den zweiten Strömungspfad (5) verschließt;
- eine elektronische Steuereinheit (8), die auf einer der ersten Seite gegenüberliegenden zweiten Seite der ersten Abdeckung (6) oder der zweiten Abdeckung (7) angeordnet ist;
wobei die elektronische Steuereinheit (8) mindestens einen elektronischen Schalter (22) umfasst, der in der Nähe der zweiten Mittenebene (Y) in einer distalen Position sowohl von dem Einlassabschnitt (10) als auch von dem Auslassabschnitt (11) angeordnet ist.

3. Heizvorrichtung nach Anspruch 1 oder 2, wobei sowohl der erste Strömungspfad (4) als auch der zweite Strömungspfad (5) mit einer ungeraden Anzahl an Haarnadelkurven versehen sind und eine Vielzahl von Kanälen (21) umfassen, die von dem Einlassabschnitt (10) abzweigen und in den Auslassabschnitt (11) münden; vorzugsweise wobei die Kanäle (21) des ersten Strömungspfads (4) und des zweiten Strömungspfads (5) durch Trennwände (9) begrenzt sind, die jeweils von der ersten Fläche und von der zweiten Fläche des Körpers (2) hervorstehen.

4. Heizvorrichtung nach Anspruch 3, wobei drei Haarnadelkurven vorgesehen sind und sowohl für den ersten Strömungspfad (4) als auch für den zweiten Strömungspfad (5) die mittlere Haarnadelkurve (30) der drei Haarnadelkurven an der zweiten Mittenebene (Y) und proximal zu der Seite der Heizvorrichtung angeordnet ist, an der der Einlassabschnitt (10) und der Auslassabschnitt (11) angeordnet sind; während die zwei seitlichen Haarnadelkurven (31) der drei Haarnadelkurven symmetrisch in Bezug auf die zweite Mittenebene (Y) und distal von der Seite der Heizvorrichtung angeordnet sind.

5. Heizvorrichtung nach einem der vorhergehenden Ansprüche, wobei Folgendes vorgesehen ist
- ein erster Rohranschluss (12), der von dem Körper (2) hervorsteht und mit dem Einlassabschnitt (10) in Verbindung steht;
- und ein zweiter Rohranschluss (13), der von dem Körper (2) hervorsteht und mit dem Auslassabschnitt (11) in Verbindung steht;
vorzugsweise wobei der erste Rohranschluss (12) und der zweite Rohranschluss (13) symmetrisch in Bezug auf die zweite Mittenebene (Y) angeordnet sind.

6. Heizvorrichtung nach Anspruch 5, wobei das Verhältnis zwischen der Breite (W) sowohl des ersten Strömungspfads (4) als auch des zweiten Strömungspfads (5) und dem Innendurchmesser des ersten Rohranschlusses (12) und des zweiten Rohranschlusses (13) in einem Bereich von 1 zu 2, vorzugsweise von 1,2 zu 1,6 liegt.

7. Heizvorrichtung nach einem der Ansprüche 3 bis 6, wobei ein Spalt (14) zwischen der Endkante (15) der Trennwände (9) und jeweils einer ersten Abdeckung (6), die mit einer ersten Seite davon den ersten Strömungspfad (4) verschließt, und einer zweiten Abdeckung (7), die mit einer ersten Seite davon den zweiten Strömungspfad (5) verschließt, vorgesehen ist, wodurch die Kanäle (21) an dem Spalt (14) quer miteinander in Verbindung stehen; vorzugsweise wobei die Endkante (15) der Trennwände (9) eine abgerundete Kante ist.

8. Heizvorrichtung nach Anspruch 7, wobei die Trennwände (9) mit mindestens einer jeweiligen Aussparung (16) an der Endkante (15) versehen sind.

9. Heizvorrichtung nach einem der Ansprüche 5 bis 8, wobei zumindest einige Trennwände (9) an einer mittleren Haarnadelkurve (30) des ersten Strömungspfads (4) und des zweiten Strömungspfads (5) unterbrochen sind, wobei die mittlere Haarnadelkurve an der zweiten Mittenebene (Y) und proximal zu der Seite der Heizvorrichtung angeordnet ist, an der der Einlassabschnitt (10) und der Auslassabschnitt (11) angeordnet sind; und eine Vielzahl von Vorsprüngen (23) in der mittleren Haarnadelkurve (30) vorgesehen ist.

10. Heizvorrichtung nach einem der Ansprüche 4 bis 9, wobei die Haarnadelkurven (30, 31) Kurven mit einem Mittelpunktswinkel von mehr als 180°, vorzugsweise mehr als 180° und weniger als 220° sind.

11. Heizvorrichtung nach einem der Ansprüche 4 bis 9, wobei die drei Haarnadelkurven (30, 31) Kurven mit einem Mittelpunktswinkel von etwa 180° sind; und wobei mindestens ein Kanal an den zwei seitlichen Haarnadelkurven (31) eine Breite A aufweist, gemessen parallel zur zweiten Mittenebene, die größer ist als die Breite B des Kanals selbst, gemessen senkrecht zur zweiten Mittenebene.

12. Heizvorrichtung nach einem der vorhergehenden Ansprüche, wobei der mindestens eine elektrische Widerstand (3) mindestens ein Rohrwiderstand ist.

13. Heizvorrichtung nach einem der Ansprüche 2 bis 12, wobei eine Dichtung (43) vorgesehen ist, die in einem Umfangsgehäuse (45) angeordnet ist, das an der jeweiligen Abdeckung (6, 7) und/oder an der jeweiligen Fläche des Körpers (2) ausgebildet ist, und wobei ein Spalt (48) an dem Umfangsgehäuse (45) zwischen dem Körper (2) und der Abdeckung (6, 7) vorgesehen ist, auf deren zweiter Seite die elektronische Steuereinheit (8) angeordnet ist.

14. Heizvorrichtung nach einem der Ansprüche 3 bis 13, wobei mindestens eine Längsrippe (40) vorgesehen ist, die von der ersten Seite der ersten Abdeckung (6) oder der zweiten Abdeckung (7) an dem mindestens einen elektronischen Schalter (22) hervorsteht und in eine entsprechende Längsaussparung (41) oder Längsunterbrechung mindestens einer Trennwand (9) eingesetzt ist, so dass die Längsflanken der mindestens einen Längsrippe (40) Teil einer Seitenwand von zwei benachbarten Kanälen (21) definieren.

15. Heizvorrichtung nach Anspruch 2 oder 14, wobei ferner auf der gesamten oder einem Teil der ersten Seite der ersten Abdeckung (6) oder der zweiten Abdeckung (7) lineare Vorsprünge (46), vorzugsweise parallel zueinander und durch Vertiefungen beabstandet, oder hervorstehende Stifte (47) vorgesehen sind.

## Revendications

1. Réchauffeur électrique (1) pour véhicule, apte à chauffer un liquide traversant ledit réchauffeur, comprenant :
- un corps (2) en matériau métallique moulé sous pression ;
- au moins une résistance électrique (3) au moins partiellement intégrée dans le corps (2) le long d'un premier plan médian (X) dudit corps (2) ;
- une section d'entrée (10) et une section de sortie (11) pour le liquide, toutes deux disposées sur un même côté du réchauffeur ;
- un premier chemin d'écoulement (4) pour le liquide, allant de la section d'entrée (10) à la section de sortie (11), formé sur une première face dudit corps (2) disposé d'un premier côté dudit premier plan médian (X) ;
- un deuxième chemin d'écoulement (5) pour le liquide, allant de ladite section d'entrée (10) à ladite section de sortie (11), formé sur une deuxième face dudit corps (2) disposé d'un deuxième côté dudit premier plan médian (X), à l'opposé du premier côté ;
dans lequel le premier chemin d'écoulement (4) et le deuxième chemin d'écoulement (5), qui comprennent ladite section d'entrée (10) et ladite section de sortie (11), sont disposés symétriquement tant par rapport audit premier plan médian (X) que par rapport à un deuxième plan médian (Y) du corps (2) perpendiculaire audit premier plan médian (X).

2. Réchauffeur selon la revendication 1, dans lequel sont prévus :
- un premier couvercle (6) qui ferme, par un premier côté de celui-ci, le premier chemin d'écoulement (4) ;
- un deuxième couvercle (7) qui ferme, par un premier côté de celui-ci, le deuxième chemin d'écoulement (5) ;
- une unité de commande électronique (8) disposée sur un deuxième côté dudit premier couvercle (6) ou deuxième couvercle (7), à l'opposé du premier côté ;
dans lequel ladite unité de commande électronique (8) comprend au moins un commutateur électronique (22) disposé à proximité dudit deuxième plan médian (Y), dans une position distale tant par rapport à ladite section d'entrée (10) que par rapport à ladite section de sortie (11).

3. Réchauffeur selon la revendication 1 ou 2, dans lequel tant le premier chemin d'écoulement (4) que le deuxième chemin d'écoulement (5) sont pourvus d'un nombre impair de coudes en épingle, et comprennent une pluralité de canaux (21) qui partent de la section d'entrée (10) et débouchent dans la section de sortie (11) ; de préférence dans lequel les canaux (21) du premier chemin d'écoulement (4) et du deuxième chemin d'écoulement (5) sont délimités par des cloisons (9) faisant saillie respectivement de la première face et de la deuxième face du corps (2).

4. Réchauffeur selon la revendication 3, dans lequel trois coudes en épingle sont prévus et, tant pour le premier chemin d'écoulement (4) que pour le deuxième chemin d'écoulement (5), le coude en épingle intermédiaire (30) parmi lesdits trois coudes en épingle est disposé au niveau du deuxième plan médian (Y) et à proximité du côté du réchauffeur où sont disposées la section d'entrée (10) et la section de sortie (11) ; tandis que les deux coudes en épingle latéraux (31) parmi lesdits trois coudes en épingle sont disposés symétriquement par rapport audit deuxième plan médian (Y) et en position distale par rapport audit côté du réchauffeur.

5. Réchauffeur selon l'une quelconque des revendications précédentes, dans lequel sont prévus :
- un premier raccord de tuyau (12), faisant saillie du corps (2), en communication avec ladite section d'entrée (10) ;
- et un deuxième raccord de tuyau (13), faisant saillie du corps (2), en communication avec ladite section de sortie (11) ;
de préférence, dans lequel ledit premier raccord de tuyau (12) et ledit deuxième raccord de tuyau (13) sont disposés symétriquement par rapport audit deuxième plan médian (Y).

6. Réchauffeur selon la revendication 5, dans lequel le rapport entre la largeur (W) tant du premier chemin d'écoulement (4) que du deuxième chemin d'écoulement (5), et le diamètre intérieur du premier raccord de tuyau (12) et du deuxième raccord de tuyau (13), est compris entre 1 et 2, de préférence entre 1,2 et 1,6.

7. Réchauffeur selon l'une quelconque des revendications 3 à 6, dans lequel un espace (14) est prévu entre le bord d'extrémité (15) des cloisons (9) et, respectivement, un premier couvercle (6), qui ferme, par un premier côté de celui-ci, le premier chemin d'écoulement (4), et un deuxième couvercle (7) qui ferme, par une première face de celui-ci, le deuxième chemin d'écoulement (5), de sorte que les canaux (21) communiquent transversalement entre eux au niveau dudit espace (14) ; de préférence, dans lequel le bord d'extrémité (15) des cloisons (9) est un bord arrondi.

8. Réchauffeur selon la revendication 7, dans lequel les cloisons (9) sont pourvues d'au moins un évidement respectif (16) au niveau du bord d'extrémité (15).

9. Réchauffeur selon l'une quelconque des revendications 5 à 8, dans lequel au moins certaines cloisons (9) sont interrompues au niveau d'un coude en épingle intermédiaire (30) du premier chemin d'écoulement (4) et du deuxième chemin d'écoulement (5), ledit coude en épingle intermédiaire étant disposé au niveau du deuxième plan médian (Y) et à proximité du côté du réchauffeur où sont disposées la section d'entrée (10) et la section de sortie (11) ; et une pluralité de saillies (23) sont prévues dans ledit coude en épingle intermédiaire (30).

10. Réchauffeur selon l'une quelconque des revendications 4 à 9, dans lequel les coudes en épingle (30, 31) sont des coudes ayant un angle au centre supérieur à 180°, de préférence supérieur à 180° et inférieur à 220°.

11. Réchauffeur selon l'une quelconque des revendications 4 à 9, dans lequel les trois coudes en épingle (30, 31) sont des coudes ayant un angle au centre d'environ 180° ; et dans lequel au moins un canal présente, au niveau des deux coudes en épingle latéraux (31), une largeur A, mesurée parallèlement au deuxième plan médian, qui est supérieure à la largeur B du canal lui-même, mesurée perpendiculairement audit deuxième plan médian.

12. Réchauffeur selon l'une quelconque des revendications précédentes, dans lequel ladite au moins une résistance électrique (3) est au moins une résistance tubulaire.

13. Réchauffeur selon l'une quelconque des revendications 2 à 12, dans lequel un joint d'étanchéité (43) est prévu, disposé dans un logement périphérique (45) réalisé sur le couvercle respectif (6, 7) et/ou sur la face respective du corps (2), et dans lequel un espace (48) est prévu au niveau dudit logement périphérique (45) entre le corps (2) et le couvercle (6, 7), sur le deuxième côté duquel est disposée l'unité de commande électronique (8).

14. Réchauffeur selon l'une quelconque des revendications 3 à 13, dans lequel au moins une ailette longitudinale (40) est prévue, faisant saillie du premier côté dudit premier couvercle (6) ou deuxième couvercle (7) au niveau dudit au moins un commutateur électronique (22), et insérée dans un évidement longitudinal correspondant (41) ou une interruption longitudinale d'au moins une cloison (9), de sorte que les flancs longitudinaux de ladite au moins une ailette longitudinale (40) définissent une partie d'une paroi latérale de deux canaux adjacents (21).

15. Réchauffeur selon la revendication 2 ou 14, dans lequel sont en outre prévues, sur tout ou partie du premier côté du premier couvercle (6) ou du deuxième couvercle (7), des saillies linéaires (46), de préférence parallèles les unes aux autres, espacées par des creux, ou des ergots saillants (47).
